(19) **Europäisches Patentamt**

**European Patent Office**

**Office européen des brevets**

(11) **EP 1 220 069 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.$^7$: **G05B 19/18**

(21) Anmeldenummer: **01129880.9**

(22) Anmeldetag: **14.12.2001**

(54) **Verfahren zur Erstellung flexibler Kurvenscheibenfunktionen über das Steuerungs- oder Anwenderprogramm**

Method for generating flexible cams via the control or user program

Procédé pour créer des cames flexibles par le programme de contrôle ou utilisateur

(84) Benannte Vertragsstaaten:
**DE FR GB**

(30) Priorität: **27.12.2000 DE 10065422**

(43) Veröffentlichungstag der Anmeldung:
**03.07.2002 Patentblatt 2002/27**

(73) Patentinhaber: **SIEMENS AKTIENGESELLSCHAFT 80333 München (DE)**

(72) Erfinder:
- **Heber, Tino, Dr.**
  **09599 Freiberg (DE)**
- **Hüfner, Holger**
  **09116 Chemnitz (DE)**
- **Jost, Gunter**
  **09573 Augustusburg (DE)**
- **Kram, Raimund**
  **91056 Erlangen (DE)**

(56) Entgegenhaltungen:
**US-A- 5 227 978**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Erstellung und/oder Optimierung einer Kurvenscheibenfunktion zur Steuerung eines bewegbaren Maschinenelementes einer numerisch gesteuerten Produktionsmaschine oder dergleichen im Laufzeitsystem der Maschine sowie eine entsprechende Steuerung für eine solche Maschine.

Aus der US 5,227,978 ist ein Beispiel für eine numerische Steuerung für eine Werkzeugmaschine bzw. einen Roboter bekannt.

Herkömmlich werden Kurven zur Steuerung von Maschinenelementen von Produktionsmaschinen wie Verpackungsmaschinen, Textilmaschinen und dergleichen außerhalb der Steuerung auf einem separaten Rechnersystem erstellt oder es werden vorbereitete Profile aufgerufen oder diese über Punkte oder einfache Polynomfunktionen online programmiert. Bei externer Erstellung werden die Kurven auf einem Tool erstellt und in die Steuerung dieser Maschinen, z.B. als speicherintensive Stützpunkttabelle, geladen. Bei einer Online-Erstellung werden Punktelisten erstellt, vorbereitete Profile verwendet, oder über einfache Polynomfunktionen Polynomzüge erstellt.

Ein Nachteil einer solchen Vorgehensweise besteht nunmehr zum einen darin, dass im Laufzeitsystem der Steuerung der Maschine keine wesentlichen Änderungen dieser Kurvenscheibenfunktionen vorgenommen werden können. Vielmehr bedarf es einer erneuten externen Erstellung unter Berücksichtigung gewünschter Änderungen auf dem separaten Rechnersystem, bevor dann erneut eine Übertragung in die Steuerung der Produktionsmaschine erfolgt. Zum anderen können in der Steuerung bisher nur einfache vorbereitete Profile / Polygonzüge erstellt werden.

Der Maschinenhersteller stattet seine Produktionsmaschine mit einer fest vorgegebenen Funktionalität aus, die der Anwender parametrieren kann, oder die sich über entsprechende, vom Maschinenhersteller implementierte Algorithmen dem Produktionsprozess anpassen kann. Für die Erstellung dieser Maschinenprogramme benötigt der Maschinenhersteller einen Zusatzrechner. Dies hat zur Folge, dass ein Maschinenhersteller in der Regel auch einen externen Zusatzrechner benötigt, um die Funktionalität einer Produktionsmaschine anzupassen oder zu erweitern. Insbesondere fehlt bisher eine Möglichkeit zur Erstellung oder Optimierung von flexiblen, hochwertigen Kurvenscheibenfunktionen, die die Bewegung eines Maschinenelementes der Produktionsmaschine vorgeben, an der Maschine selbst.

Dies schränkt die Flexibilität unerwünschterweise ein und verhindert die Online-Erstellung hochwertiger, zusammengesetzter Kurvenscheibenfunktionen.

Aufgabe der vorliegenden Erfindung ist es daher, eine Möglichkeit zur Programmierung und Optimierung von hochwertigen, zusammengesetzten Kurvenscheibenfunktionen über das Anwenderprogramm zu schaffen.

Gemäß der vorliegenden Erfindung wird diese Aufgabe gelöst, durch ein Verfahren mit den Merkmalen nach Anspruch 1.

Das eingangs genannte Verfahren wird dadurch weitergebildet, dass eine Bewegung des Maschinenelementes durch die Kurvenscheibenfunktion abschnittsweise beschrieben wird, indem einzelne aufeinanderfolgende Bewegungsabschnitte durch Segmente und/oder Punkte definiert werden und zwischen solchen Bewegungsabschnitten nach einer vorgebbaren Interpolationsvorschrift interpoliert wird, wobei Befehle zur Vorgabe und/oder zum Einfügen von Punkten, Segmenten und Interpolationsvorschriften zur Laufzeit bereitgestellt werden.

Ferner wird die Aufgabe durch eine Steuerung nach den Merkmalen des Anspruchs 12 gelöst. Bei einer Steuerung für ein bewegbares Maschinenelement einer industriellen Produktionsmaschine oder dergleichen ist also

- im Laufzeitsystem der Steuerung über entsprechende Steuerungsbefehle zur Erstellung und/oder Optimierung einer Kurvenscheibenfunktion eine Bewegung des Maschinenelementes durch die Kurvenscheibenfunktion abschnittsweise beschreibbar, indem
- einzelne aufeinanderfolgende Bewegungsabschnitte durch Segmente und/oder Punkte definierbar sind und
- zwischen solchen Bewegungsabschnitten nach einer vorgebbaren Interpolationsvorschrift interpolierbar ist, wobei
- Steuerungsbefehle zur Vorgabe und/oder zum Einfügen von Punkten, Segmenten und Interpolationsvorschriften zur Laufzeit vorgesehen sind.

Sowohl für das Verfahren als auch für die Steuerung nach der Erfindung hat es sich als vorteilhaft erwiesen, wenn Segmente durch eine Kombination aus einem Polynom und einem trigonometrischen Anteil vorgegeben werden.

Besonders günstig hat sich hierbei eine Kombination aus einem Polynom mit einem Polynomgrad von mindestens sechs und einer Sinus-Funktion als trigonometrischem Anteil zur Definition von Segmenten erwiesen.

Weitere vorteilhafte Ausgestaltungen der Erfindung verwenden als Interpolationsvorschrift zur Verbindung zwischen aufeinanderfolgenden Bewegungsabschnitten lineare Verbindungen oder kubische Splines oder Bezier-Splines. Solche Splines setzen sich stückweise aus Polynomen zusammen.

Um die in normierter Form vorliegenden Bewegungsgesetze der VDI-Norm 2143 nutzen zu können, werden die Polynomsegmente allgemeingültig in normierter Form abgelegt und ergänzende Parameter bezüglich der jeweiligen tatsächlichen Ausdehnung für beide Achskoordinaten zugewiesen.

Weiter hat es sich als günstig erwiesen, wenn das Verhalten an den Rändern der Kurvenscheibenfunktion über Kriterien bezüglich der Stetigkeit von der Position und/oder der Geschwindigkeit und/oder der Beschleunigung des Maschinenelementes vorgegeben wird.

Nach einer weiteren vorteilhaften Ausgestaltung sind Skalierungsbereiche und dazugehörige Skalierungsfaktoren für diese Bereiche direkt im Anwenderprogramm vorgebbar. Die Skalierungsbereiche können, brauchen aber nicht mit den Segmentdefinitionen überein zu stimmen.

Wenn die Parameter zur Definition der Kurvenscheibenfunktion direkt aus einem Produktionsprozess der Maschine abgeleitet werden, dann lässt sich durch die Erfindung eine prozessadaptive Kurvenscheibengenerierung erreichen.

Um neue Kurven definieren zu können, kann bei einer weiteren vorteilhaften Ausführung der Erfindung zur Vorbereitung einer Neudefinition einer Kurvenscheibenfunktion eine bestehende Kurvenscheibenfunktion im Laufzeitsystem zurückgesetzt werden.

Eine auf diese Weise erfindungsgemäß erzeugte bzw. optimierte Kurve liegt als Abbildung im Speicher der Steuerung vor und kann nach einer weiteren vorteilhaften Ausgestaltung für einen Gleichlauf herangezogen werden, indem eine Folgeachse des bewegbaren Maschinenelementes zu dessen Steuerung entsprechend der definierten Kurvenscheibenfunktion einer zugeordneten Leitachse des Maschinenelementes folgt.

Mit der Erfindung kann somit der Speicherplatzbedarf in der Steuerung für Anwendungsprogramme und Anwenderdaten gegenüber herkömmlich abgelegten umfangreichen Tabellen wesentlich verringert werden. Außerdem wird die Flexibilität einer mit der Erfindung ausgerüsteten Produktionsmaschine entscheidend verbessert, indem die Funktionalität an der Maschine selbst verändert oder vergrößert werden kann. Dies erhöht zusätzlich die Wirtschaftlichkeit der Maschine.

Weitere Vorteile und Details der Erfindung ergeben sich anhand der folgenden Beschreibung eines Ausführungsbeispiels und in Verbindung mit den Figuren. Es zeigen in Prinzipdarstellung:

FIG 1    eine Kurvenscheibenfunktion bestehend aus mehreren durch Interpolation verbundenen Bewegungsabschnitten,

FIG 2    eine Gegenüberstellung eines Segmentes einer Kurve in Normalform und dessen Abbildung nach einer Transformation und

FIG 3    eine Prinzipskizze der von einer Maschinen-Steuerung gemäß der Erfindung berücksichtigten Parameter.

Gemäß der Erfindung wird eine Kurvenscheibenfunktion, im Laufzeitsystem der numerischen Steuerung einer Maschine über eine Programmierungsmöglichkeit mit Hilfe speziell bereitgestellter Befehle im Anwenderprogramm erstellt. Dadurch wird ein externer Zusatzrechner speziell zur Erstellung von Kurvenscheibenfunktionen nicht mehr unmittelbar benötigt, um in ein Kurvenscheibenfunktionsprofil einer bestehenden Automatisierungslösung einzugreifen. Es ist so möglich, eine hochwertige, zusammengesetzte Kurvenscheibenfunktion mit den im folgenden näher beschriebenen neuen Befehlen im Anwenderprogramm neu zu erstellen.

Dazu werden Kurvenscheibenfunktionen $y = f(x)$ aus mehreren Funktionen zusammengesetzt, die segmentweise vorgegeben werden. Dazu wird die von einem bewegbaren Maschinenelement zu beschreibende Bewegung in einzelne aufeinanderfolgende Segmentabschnitte $x_1$ bis $x_n$ aufgelöst. Diese Segmentabschnitte werden nun durch Funktionen beschrieben, die aus Einzelpunkten A oder Segmenten B vorgebbar sind.

Zwischen solchen Punkten A oder Segmenten B wird dann zur Verbindung einzelner Bewegungsabschnitte $x_1$ bis $x_n$ ein Interpolationssegment definiert, indem eine Interpolationsvorschrift C vorgegeben wird. Diese kann wahlweise eine lineare Verbindung $c_1$ oder eine Verbindung über kubische Splines $c_2$ oder Bezier-Splines herstellen.

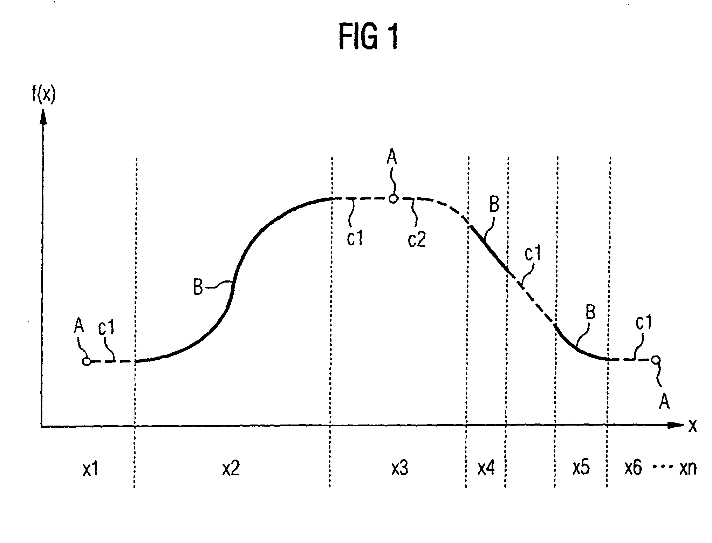

Die FIG 1 zeigt ein Beispiel einer solchermaßen generierten Kurvenscheibenfunktion $f(x)$ über den in Bewegungsabschnitte $x_1$ bis $x_6$ unterteilten Weg x, die sich aus Einzelpunkten A und Segmenten B zusammensetzt, welche über Interpolationssegemente $c_1$ und $c_2$ verbunden sind. Die Interpolationssegmente sind dabei willkürlich, sofern vorhanden, den Bewegungsabschnitten mit Einzelpunkten A zugeordnet.

Der den Einzelpunkt A von Bewegungsabschnitt $x_1$ mit dem Polynomsegment B des Bewegungsabschnitts $x_2$ verbindende Interpolationsabschnitt beschreibt eine lineare Verbindung $c_1$. In Bewegungsabschnitt $x_3$ schließt sich ein weiterer Einzelpunkt A an, welcher ebenfalls über einen linearen Interpolationsabschnitt $c_1$ mit dem Polynomsegment B aus $x_2$ verbunden ist. In Abschnitt $x_4$ schließt sich ein lineares Segment B an, das über einen kubischen Spline $c_2$ mit dem Einzelpunkt A aus $x_3$ und über eine weitere gerade Interpolationsverbindung $c_1$ mit einem weiteren kubischen Spline B in Bewegungsabschnitt $x_5$ verbunden ist. Der Bewegungsabschnitt $x_5$ ist ebenfalls über eine lineare Interpolationsverbindung $c_1$ mit einem weiteren Einzelpunkt A in dem Bewegungsabschnitt $x_6$ verbunden.

Dieser Kurvenverlauf stellt somit eine exemplarische Kurvenscheibenfunktion $f(x)$ dar, die über entsprechende Befehle im Laufzeitsystem einer Maschinen-Steuerung erstellt, ergänzt oder optimiert werden kann. Solche Befehle sind beispielsweise

A: _addPointToCam()
B: _addSegmentToCam()
C: _interpolateCam()
D: _setCamScale()
E: _resetCam()

und werden im Anwenderprogramm programmiert, welches dann beim Download compiliert wird. Zusätzlich ist das Verhalten an den Kurvenrändern über Kriterien bezüglich der Stetigkeit von beispielsweise der Position, der Geschwindigkeit oder der Beschleunigung des bewegbaren Maschinenelementes vorgebbar.

Kurvenscheibenfunktionen bzw. deren Kurvensegmente werden als Funktionen beschrieben, die aus Polynomen bis zum Polynomgrad 6 oder höher und einem trigonometrischen Anteil, insbesondere einer zusammengesetzten trigonometrischen Sinus-Funktion, bestehen entsprechend der folgenden Berechnungsvorschrift

$$y = \sum_{n=0}^{6} (A_n \cdot x^n) + B \cdot \sin(C \cdot x + D) \ . \tag{1}$$

Die Faktoren A bis D sind dabei nicht mit den im vorangehenden verwendeten Bezugszeichen für die Befehle für Einzelpunkte, Segmente und Interpolationsvorschriften etc. zu verwechseln.

Damit wird unter anderem erreicht, dass die Übergänge nach der VDI-Richtlinie 2143 "Bewegungsgesetze für Kurvengetriebe" abgebildet bzw. realisiert werden können. In der VDI-Richtlinie 2143 sind optimierte Bewegungsgesetzte für Kurvenscheibengetriebe angegeben, die für die Bewegungen bei solchen Maschinen optimal sind.

Dabei ist es günstig, die Darstellung, wie in FIG 1 gezeigt, in die auf 1 normierte Normalform zu bringen entsprechend

$$\{f(p): p \in [0,1], f \in [0,1]\} \ . \tag{2}$$

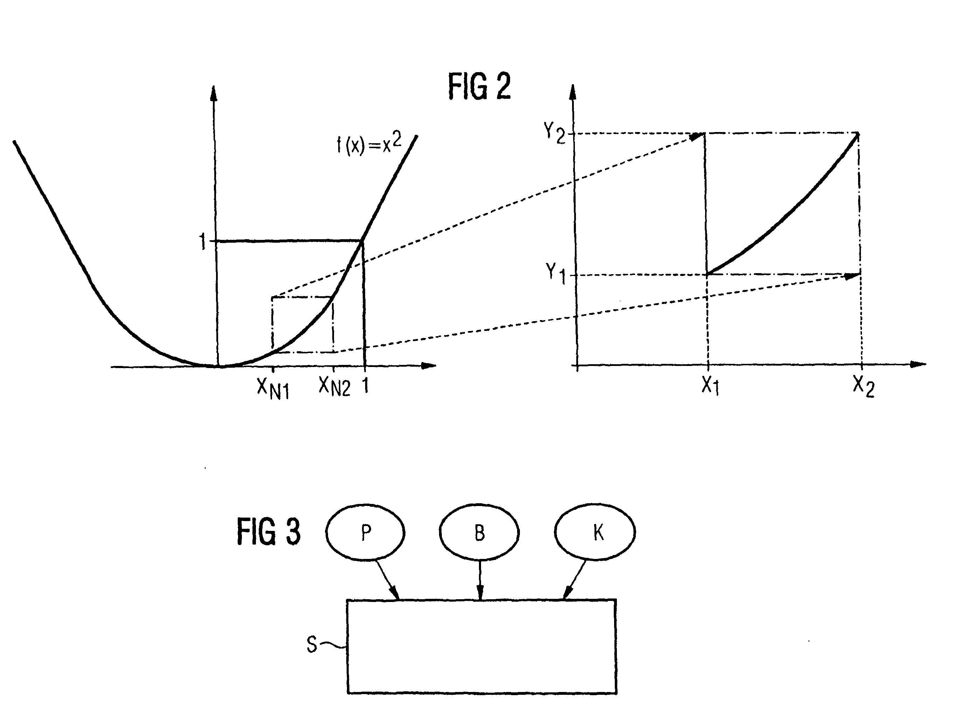

Die Darstellung in FIG 2 veranschaulicht diese Transformation mit Hilfe von zwei gegenübergestellten Koordinatensystemen. Die linke Darstellung zeigt eine Kurvenscheibenfunktion $f(x) = x^2$ mit dem entsprechenden Segment in Normalform im ersten Quadranten des Koordinatensystems. Zur Beschreibung eines entsprechenden Bewegungsabschnitts wird nur der Bereich zwischen XN1 und XN2 benötigt.

Die durch die voranstehend beschriebene Transformation entstehende Darstellung ist in dem rechten Koordinatensystem gezeigt. Die gestrichelten Pfeile deuten diese Transformation an. Dort ist der entsprechend gekennzeichnete Ausschnitt im Bereich von X1, Y1 und X2, Y2 abgebildet. Über zusätzliche Parameter wird einem solchen Segment B seine tatsächliche Ausdehnung in beiden Achskoordinaten X und Y (Definitions- und Wertebereich) zugewiesen.

Neben der Erstellung solcher Kurvenscheibenfunktionen direkt im Anwenderprogramm lassen sich auch weitere Befehle zum Definieren von Skalierungsbereichen direkt im Laufzeitsystem bereitstellen. So dient ein weiterer Befehl der Steuerung zum Skalieren der Gesamtkurve f(x) oder von einzelnen Kurvenbereichen. Auch lassen sich Skalierungsfaktoren für diese Bereiche direkt im Laufzeitsystem vorgeben, ebenso Befehle zur Definition von Offset-Werten für den Definitionsbereich und den Wertebereich.

Weitere Befehle dienen der Aktivierung oder Deaktivierung einer Kurvenscheibe in einer Gleichlauffunktion, in der eine Folgeachse eines bewegbaren Maschinenelementes dessen zugeordneter Leitachse entsprechend der definierten Kurvenscheibenfunktion f(x) folgt.

Ein zusätzliches Rechnersystem außerhalb der Steuerung ist mit obiger Funktionalität gemäß der vorliegenden Erfindung für die Erstellung von Kurven zur Definition des Bewegungsverlaufes eines Maschinenelementes somit nicht mehr erforderlich. Eine Parametervorgabe zur Kurvendefinition ist über einfache Bediensysteme der Steuerung selbst möglich.

Als weiterer Vorteil der Erfindung erschließt sich die Möglichkeit einer Parametervorgabe oder Parameterableitung direkt aus einem laufenden Prozess, z.B. einem Produktionsprozess einer Produktionsmaschine. Kurvenscheibenfunktionen f(x) können so direkt dem Prozess angepasst werden, indem über die vorangehend dargestellten Befehle und aus dem Prozess abgeleiteten Parametern die Kurvenscheibenfunktion adaptiert wird. Eine solche prozessadaptive Kurvenscheibenfunktionsgenerierung und Kurvenscheibenfunktionsoptimierung ohne Zusatzrechner eröffnet neue Möglichkeiten im Hinblick auf die Produktivität und Flexibilität von mit solchen Steuerungen gemäß der Erfindung ausgerüsteten Produktionsmaschinen. So wird es zum Beispiel möglich, auf Verschleißerscheinungen wie beispielsweise Loseeffekte durch eine adaptive Anpassung der zugrunde liegenden Kurvenscheibenfunktion mit den im vorangehenden geschilderten Befehlen zu reagieren.

Die FIG 3 veranschaulicht diese Möglichkeiten anhand einer Maschinen-Steuerung S einer beliebigen Produktionsmaschine mit der im vorangehenden geschilderten Funktionalität und den bei einer Kurvenscheibenerstellung direkt im Laufzeitsystem der Steuerung zu berücksichtigenden Parametern. Eine solche Maschinen-Steuerung verfügt unter anderem über einen Interpolator und kann direkt Bewegungsbefehle ausführen. Die Steuerung verarbeitet Parameter aus dem Bearbeitungsprozess P selbst, über ein Bediensystem B vorgegebene Befehle und die von der Maschine und deren konstruktivem Aufbau selbst vorgegebenen Achskriterien K des bewegbaren Maschinenelementes.

Entsprechende Kurvenerstellungsprogramme können durch den Maschinenhersteller in Form eines parametrisierbaren Automatisierungsprogramms in der Steuerung S in Bibliotheken abgelegt werden, indem der Maschinenhersteller den Ablauf an seiner Maschine programmiert und dem Endanwender der Produktionsmaschine dann über ein Bedienfeld Eingabemasken zur Verfügung stellt, mit denen dieser Produktionsparameter und Optimierungsparameter eingeben kann, die dann im Anwenderprogramm des Maschinenherstellers ausgewertet und der Prozess und die Bewegung der Maschine optimiert werden können.

Damit sind dann die Eigenschaften einer Bibliotheksfunktion für die online erstellbaren Kurvenscheiben $f(x1...xn)$ nutzbar. Über die Anwendungsprogramme können damit komplexe Kurvenscheibenfunktionen $f(x)$ entsprechend den vorliegenden online-Parametern im Laufzeitsystem erstellt und optimiert werden, mit denen ein optimaler Bewegungsgleichlauf zwischen Achsen, z.B. zwischen einer Hauptachse und Folgeachsen einer Produktionsmaschine, erzeugt werden kann.

**Patentansprüche**

1. Verfahren zur Erstellung und/oder Optimierung einer Kurvenscheibenfunktion zur Steuerung eines bewegbaren Maschinenelementes einer numerisch gesteuerten Produktionsmaschine im Laufzeitsystem der Maschine, wobei eine Bewegung (x) des Maschinenelementes durch die Kurvenscheibenfunktion (f(x)) abschnittsweise beschrieben wird, indem einzelne aufeinanderfolgende Bewegungsabschnitte (x1...xn) durch Segmente (B) und/oder Punkte (A) definiert werden und zwischen solchen Bewegungsabschnitten nach einer vorgebbaren Interpolationsvorschrift (C) interpoliert wird, wobei Befehle zur Vorgabe und/oder zum Einfügen von Punkten (A), Segmenten (B) und Interpolationsvorschriften (C) zur Laufzeit bereitgestellt werden, wobei die Kurvenscheibenfunktion über Befehle im Laufzeitsystem einer Maschinensteuerung erstellt wird.

2. Verfahren zur Erstellung und/oder Optimierung einer Kurvenscheibenfunktion nach Anspruch 1, wobei Segmente (B) durch eine Kombination aus einem Polynom und einem trigonometrischen Anteil vorgegeben werden.

3. Verfahren zur Erstellung und/oder Optimierung einer Kurvenscheibenfunktion nach Anspruch 2, wobei eine Kombination aus einem Polynom mit mindestens Polynomgrad sechs und einer Sinus-Funktion als trigonometrischem Anteil zur Definition von Segmenten (B) verwendet wird.

4. Verfahren zur Erstellung und/oder Optimierung einer Kurvenscheibenfunktion nach Anspruch 1, 2 oder 3, wobei als Interpolationsvorschrift (C) eine lineare Verbindung (c1) zwischen aufeinanderfolgenden Bewegungsabschnitten (x1...xn) vorgegeben wird.

5. Verfahren zur Erstellung und/oder Optimierung einer Kurvenscheibenfunktion nach einem der Ansprüche 1 bis 4, wobei als Interpolationsvorschrift (C) zur Verbindung zwischen aufeinanderfolgenden Bewegungsabschnitten (x1...xn) kubische Splines (c2) vorgegeben werden.

6. Verfahren zur Erstellung und/oder Optimierung einer Kurvenscheibenfunktion nach einem der Ansprüche 1 bis 5, wobei als Interpolationsvorschrift (C) zur Verbindung zwischen aufeinanderfolgenden Bewegungsabschnitten (x1...xn) Bezier-Splines vorgegeben werden.

7. Verfahren zur Erstellung und/oder Optimierung einer Kurvenscheibenfunktion nach einem der vorangehenden Ansprüche 2 bis 6, wobei Polynomsegmente (f(p)) allgemeingültig in normierter Form (XN1, XN2) abgelegt werden und ergänzende Parameter bezüglich der jeweiligen tatsächlichen Ausdehnung für beide Achskoordinaten (X1, X2; Y1, Y2) zugewiesen werden.

8. Verfahren zur Erstellung und/oder Optimierung einer Kurvenscheibenfunktion nach einem der vorangehenden Ansprüche, wobei das Verhalten an den Rändern der Kurvenscheibenfunktion (f(x)) über Kriterien bezüglich der Stetigkeit von der Position und/oder der Geschwindigkeit und/oder der Beschleunigung des Maschinenelementes vorgegeben wird.

9. Verfahren zur Erstellung und/oder Optimierung einer Kurvenscheibenfunktion nach einem der vorangehenden Ansprüche, wobei Skalierungsbereiche (D) und Skalierungsfaktoren für diese Bereiche im Steuerungsprogramm der Maschine zur Laufzeit vorgegeben werden.

10. Verfahren zur Erstellung und/oder Optimierung einer Kurvenscheibenfunktion nach einem der vorangehenden Ansprüche, wobei Parameter zur Definition der Kurvenscheibenfunktion (f(x)) direkt aus einem Bearbeitungsprozess der Maschine abgeleitet werden.

11. Verfahren zur Erstellung und/oder Optimierung einer Kurvenscheibenfunktion nach einem der vorangehenden Ansprüche, wobei zur Vorbereitung einer Neudefinition einer Kurvenscheibenfunktion (f(x)) eine bestehende Kurvenscheibenfunktion im Laufzeitsystem zurückgesetzt (E) wird.

12. Steuerung (S) für ein bewegbares Maschinenelement einer industriellen Produktionsmaschine, wobei

   - im Laufzeitsystem der Steuerung über entsprechende Steuerungsbefehle zur Erstellung und/oder Optimierung einer Kurvenscheibenfunktion (f(x)) eine Bewegung (x) des Maschinenelementes durch die Kurvenscheibenfunktion (f(x)) abschnittsweise beschreibbar ist, indem
   - einzelne aufeinanderfolgende Bewegungsabschnitte (x1...xn) durch Segmente (B) und/oder Punkte (A) definierbar sind und
   - zwischen solchen Bewegungsabschnitten nach einer vorgebbaren Interpolationsvorschrift (C) interpolierbar ist, wobei
   - Steuerungsbefehle zur Vorgabe und/oder zum Einfügen von Punkten (A), Segmenten (B) und Interpolationsvorschriften (C) zur Laufzeit vorgesehen sind.

13. Steuerung nach Anspruch 12, wobei ein Rechenmittel vorgesehen ist, das zur Bestimmung von Segmenten (B) durch eine Kombination aus einem Polynom und einem trigonometrischen Anteil dient.

14. Steuerung nach Anspruch 13, wobei das Rechenmittel zur Definition eines Segmentes (B) ein Polynom mit mindestens Polynomgrad sechs mit einer Sinus-Funktion als trigonometrischem Anteil verknüpft.

15. Steuerung nach Anspruch 12, 13 oder 14, wobei durch das Rechenmittel zwischen aufeinanderfolgenden Bewegungsabschnitten (x1...xn) eine lineare Verbindung (c1) interpolierbar ist.

16. Steuerung nach einem der Ansprüche 12 bis 15, wobei durch das Rechenmittel zwischen aufeinanderfolgenden Bewegungsabschnitten (x1...xn) mittels kubischen Splines (c2) interpolierbar ist.

17. Steuerung nach einem der Ansprüche 12 bis 16, wobei durch das Rechenmittel zwischen aufeinanderfolgenden Bewegungsabschnitten (x1...xn) mittels Bezier-Splines interpolierbar ist.

18. Steuerung nach einem der Ansprüche 13 bis 17, wobei Polynomsegmente (f(p)) in der Steuerung allgemeingültig in normierter Form (XN1, XN2) zusammen mit ergänzenden Parametern bezüglich der jeweiligen tatsächlichen Ausdehnung für beide Achskoordinaten (X1, X2; Y1, Y2) speicherbar sind.

19. Steuerung nach einem der Ansprüche 12 bis 18, wobei der Steuerung im Laufzeitsystem das Verhalten an den Rändern der Kurvenscheibenfunktion (f(x)) über Kriterien bezüglich der Stetigkeit von der Position und/oder der Geschwindigkeit und/oder der Beschleunigung des Maschinenelementes vorgebbar ist.

20. Steuerung nach einem der Ansprüche 12 bis 19, wobei der Steuerung im Laufzeitsystem Skalierungsbereiche (D) und Skalierungsfaktoren für diese Bereiche im Laufzeitsystem der Maschine vorgebbar sind.

21. Steuerung nach einem der Ansprüche 12 bis 20, wobei die Parameter zur Definition der Kurvenscheibenfunktion (f(x)) zur Laufzeit direkt aus einem aktuellen Bearbeitungsprozess (P) ableitbar und so direkt im Steuerprogramm bildbar sind oder über eine Bedieneinheit (B) vorgebbar sind.

22. Steuerung nach einem der Ansprüche 12 bis 21, wobei in der Steuerung zur Vorbereitung einer Neudefinition einer Kurvenscheibenfunktion (f(x)) eine bestehende Kurvenscheibenfunktion im Laufzeitsystem zurücksetzbar (E) ist.

**23.** Steuerung nach einem der Ansprüche 12 bis 22, wobei eine Folgeachse des bewegbaren Maschinenelementes zu dessen Steuerung entsprechend der definierten Kurvenscheibenfunktion (f(x)) einer zugeordneten Leitachse des Maschinenelementes folgt.

## Claims

**1.** Method for creating and/or optimising a cam-disk function for controlling a movable machine element of a numerically controlled production machine in the operating time system of the machine, a movement (x) of the machine element being described in sections by the cam-disk function (f(x)) by virtue of the fact that individual consecutive movement sections (x1...xn) are defined by segments (B) and/or points (A), and interpolation is carried out between such movement sections according to a prescribable interpolation rule (C), instructions being provided for prescribing and/or for inserting points (A), segments (B) and interpolation rules (C) in relation to the operating time, the cam-disk function being created via instructions in the operating time system of a machine controller.

**2.** Method for creating and/or optimising a cam-disk function according to Claim 1, in which segments (B) are prescribed by a combination of a polynomial and a trigonometric component.

**3.** Method for creating and/or optimising a cam-disk function according to Claim 2, in which a combination of a polynomial having at least a polynomial degree of six and a sinusoidal function is used as trigonometric component for defining segments (B).

**4.** Method for creating and/or optimising a cam-disk function according to Claim 1, 2 or 3, in which a linear connection (c1) between consecutive movement sections (x1...xn) is prescribed as an interpolation rule (C).

**5.** Method for creating and/or optimising a cam-disk function according to one of Claims 1 to 4, in which cubic splines (c2) are prescribed as an interpolation rule (C) for connection between consecutive movement sections (x1...xn).

**6.** Method for creating and/or optimising a cam-disk function according to one of Claims 1 to 5, in which Bezier splines are prescribed as an interpolation rule (C) for connection between consecutive movement sections (x1...xn).

**7.** Method for creating and/or optimising a cam-disk function according to one of the preceding Claims 2 to 6, in which polynomial segments (f(p)) are stored in normal form (XN1, XN2) in a generally valid fashion, and supplementary parameters referring to the respective actual extension for both axial coordinates (X1, X2; Y1, Y2) are allocated.

**8.** Method for creating and/or optimising a cam-disk function according to one of the preceding claims, in which the response at the edges of the cam-disk function (f(x)) is prescribed via criteria referring to the continuity of the position and/or the speed and/or the acceleration of the machine element.

**9.** Method for creating and/or optimising a cam-disk function according to one of the preceding claims, in which in relation to the operating time scaling ranges (D) and scaling factors for these ranges are prescribed in the control program of the machine.

**10.** Method for creating and/or optimising a cam-disk function according to one of the preceding claims, in which parameters for defining the cam-disk function (f(x)) are derived directly from a machining process of the machine.

**11.** Method for creating and/or optimising a cam-disk function according to one of the preceding claims, in which an existing cam-disk function is reset in the operating time system for the purpose of preparing a new definition of a cam-disk function (f(x).

**12.** Controller (S) for a movable machine element of an industrial production machine, in which

- a movement (x) of the machine element can be described in sections by the cam-disk function (f(x)) in the operating time system of the controller via appropriate control instructions for creating and/or optimising a cam-disk function (f(x)), by virtue of the fact that
- individual consecutive movement sections (x1...xn) can be defined by segments (B) and/or points (A) and
- interpolation can be carried out between such movement sections according to a prescribable interpolation rule (C), whereby

- control instructions are provided for prescribing and/or for inserting points (A), segments (B) and interpolation rules (C) in relation to the operating time.

13. Controller according to Claim 12, in which a computing means is provided which serves to determine segments (B) by means of a combination of a polynomial and a trigonometric component.

14. Controller according to Claim 13, in which in order to define a segment (B) the computing means combines a polynomial having at least a polynomial degree of six with a sinusoidal function as trigonometric component.

15. Controller according to Claim 12, 13 or 14, in which a linear connection (c1) can be interpolated by the computing means between consecutive movement sections (x1...xn).

16. Controller according to one of Claims 12 to 15, in which the computing means can be used to interpolate between consecutive movement sections (x1...xn) by means of cubic splines (c2).

17. Controller according to one of Claims 12 to 16, in which the computing means can be used to interpolate between consecutive movement sections (x1...xn) by means of Bezier splines.

18. Controller according to one of Claims 13 to 17, in which polynomial segments (f(p)) can be stored in the controller in normal form (XN1, XN2) in a generally valid fashion together with supplementary parameters referring to the respective actual extension for both axial coordinates (X1, X2; Y1, Y2).

19. Controller according to one of Claims 12 to 18, in which the controller can be prescribed, in the operating time system, the response at the edges of the cam-disk function (f(x)) via criteria referring to the continuity of the position and/or the speed and/or the acceleration of the machine element.

20. Controller according to one of Claims 12 to 19, in which the controller can be prescribed, in the operating time system, scaling ranges (D) and scaling factors for these ranges in the operating time system of the machine.

21. Controller according to one of Claims 12 to 20, in which the parameters for defining the call-disk function (f(x)) relative to the operating time can be derived directly from a current machining process (P), and so can be formed directly in the control program, or can be presented via an operator's station (B).

22. Controller according to one of Claims 12 to 21, in which an existing cam-disk function can be reset (E) in the controller in the operating time system for the purpose of preparing a new definition of a cam-disk function (f(x)).

23. Controller according to one of Claims 12 to 22, in which in order to control the movable machine element a slave shaft thereof follows an assigned main shaft of the machine element in accordance with the defined cam-disk function (f(x)).

## Revendications

1. Procédé d'élaboration et/ou d'optimisation d'une fonction de came pour la commande d'un élément de machine mobile d'une machine de production à commande numérique dans le système d'analyse du temps de fonctionnement de la machine, un mouvement (x) de l'élément de machine étant décrit par tronçons par la fonction de came (f(x)) par le fait que différents tronçons de mouvement successifs (x1 à xn) sont définis par des segments (B) et/ou des points (A) et qu'une interpolation est effectuée entre des tronçons de mouvement de ce type selon une règle d'interpolation (C) pouvant être prescrite, des instructions pour la prescription et/ou pour l'insertion de points (A), segments (B) et règles d'interpolation (C) étant préparées pour l'exécution et la fonction de came étant élaborée par l'intermédiaire d'instructions dans le système d'analyse du temps de fonctionnement d'une commande de machine.

2. Procédé d'élaboration et/ou d'optimisation d'une fonction de came selon la revendication 1, dans lequel des segments (B) sont prescrits par une combinaison d'un polynôme et d'une composante trigonométrique.

3. Procédé d'élaboration et/ou d'optimisation d'une fonction de came selon la revendication 2, dans lequel on utilise une combinaison d'un polynôme de degré polynomial minimal six et d'une fonction sinus comme composante trigonométrique pour la définition de segments (B).

4. Procédé d'élaboration et/ou d'optimisation d'une fonction de came selon la revendication 1, 2 ou 3, dans lequel on prescrit comme règle d'interpolation (C) une liaison linéaire (c1) entre des tronçons de mouvement successifs (x1 à xn).

5. Procédé d'élaboration et/ou d'optimisation d'une fonction de came selon l'une des revendications 1 à 4, dans lequel on utilise comme règle d'interpolation (C) pour la liaison entre des tronçons de mouvement successifs (x1 à xn) des fonctions spline cubiques (c2).

6. Procédé d'élaboration et/ou d'optimisation d'une fonction de came selon l'une des revendications 1 à 5, dans lequel on prescrit comme règle d'interpolation (C) pour la liaison entre des tronçons de mouvement successifs (x1 à xn) des fonctions spline de Bézier.

7. Procédé d'élaboration et/ou d'optimisation d'une fonction de came selon l'une des revendications précédentes 2 à 6, dans lequel on enregistre des segments polynomiaux (f(p)) universellement valables sous forme normée (XN1, XN2) et on attribue des paramètres complémentaires se rapportant à l'extension réelle respective pour les deux coordonnées d'axes (X1, X2; Y1, Y2).

8. Procédé d'élaboration et/ou d'optimisation d'une fonction de came selon l'une des revendications précédentes, dans lequel on prescrit le comportement aux limites de la fonction de came (f(x)) par l'intermédiaire de critères concernant la continuité de la position et/ou de la vitesse et/ou de l'accélération de l'élément de machine.

9. Procédé d'élaboration et/ou d'optimisation d'une fonction de came selon l'une des revendications précédentes, dans lequel on prescrit des plages de cadrage (D) et des facteurs de cadrage pour ces plages dans le programme de commande de la machine pour l'exécution.

10. Procédé d'élaboration et/ou d'optimisation d'une fonction de came selon l'une des revendications précédentes, dans lequel on déduit des paramètres pour la définition de la fonction de came (f(x)) directement d'un processus de travail de la machine.

11. Procédé d'élaboration et/ou d'optimisation d'une fonction de came selon l'une des revendications précédentes, dans lequel, pour la préparation d'une nouvelle définition d'une fonction de came (f(x)), on remet à l'état initial (E) une fonction de came existante dans le système d'analyse du temps de fonctionnement.

12. Commande (S) pour un élément de machine mobile d'une machine de production industrielle, dans laquelle

   - dans le système d'analyse du temps de fonctionnement de la commande, pour l'élaboration et/ou l'optimisation d'une fonction de came (f(x)), un mouvement (x) de l'élément de machine peut être décrit par tronçons par la fonction de came (f(x)) par l'intermédiaire d'instructions de commande appropriées par le fait que
   - différents tronçons de mouvement successifs (x1 à xn) peuvent être définis par des segments (B) et/ou des points (A) et
   - une interpolation peut être effectuée entre des tronçons de mouvement de ce type selon une règle d'interpolation (C) pouvant être prescrite,
   - des instructions de commande pour la prescription et/ou pour l'insertion de points (A), segments (B) et règles d'interpolation (C) étant prévues pour l'exécution.

13. Commande selon la revendication 12, dans laquelle il est prévu un moyen de calcul qui sert à déterminer des segments (B) en combinant un polynôme et une composante trigonométrique.

14. Commande selon la revendication 13, dans laquelle le moyen de calcul pour la définition d'un segment (B) combine un polynôme de degré polynomial minimal six et une fonction sinus comme composante trigonométrique.

15. Commande selon la revendication 12, 13 ou 14, dans laquelle, avec le moyen de calcul, une liaison linéaire (c1) peut être interpolée entre des tronçons de mouvement successifs (x1 à xn).

16. Commande selon l'une des revendications 12 à 15, dans laquelle, avec le moyen de calcul, l'interpolation entre des tronçons de mouvement successifs (x1 à xn) peut s'effectuer au moyen de fonctions spline cubiques (c2).

**17.** Commande selon l'une des revendications 12 à 16, dans laquelle, avec le moyen de calcul, l'interpolation entre des tronçons de mouvement successifs (x1 à xn) peut s'effectuer au moyen de fonctions spline de Bézier.

**18.** Commande selon l'une des revendications 13 à 17, dans laquelle, dans la commande, des segments polynomiaux (f(p)) sont mémorisés universellement valables sous forme normée (XN1, XN2) conjointement avec des paramètres complémentaires se rapportant à l'extension réelle respective pour les deux coordonnées d'axes (X1, X2 ; Y1, Y2).

**19.** Commande selon l'une des revendications 12 à 18, dans laquelle le comportement aux limites de la fonction de came (f(x)) peut être prescrit à la commande dans le système d'analyse du temps de fonctionnement par l'intermédiaire de critères concernant la continuité de la position et/ou de la vitesse et/ou de l'accélération de l'élément de machine.

**20.** Commande selon l'une des revendications 12 à 19, dans laquelle des plages de cadrage (D) et des facteurs de cadrage pour ces plages dans le système d'analyse du temps de fonctionnement de la machine peuvent être prescrits à la commande dans le système d'analyse du temps de fonctionnement.

**21.** Commande selon l'une des revendications 12 à 20, dans laquelle les paramètres pour la définition de la fonction de came (f(x)) peuvent être déduits pour l'analyse du temps de fonctionnement directement d'un processus de travail actuel (P) et peuvent ainsi être formés directement dans le programme de commande ou peuvent être prescrits par l'intermédiaire d'une unité de contrôle (B).

**22.** Commande selon l'une des revendications 12 à 21, dans laquelle, dans la commande, pour la préparation d'une nouvelle définition d'une fonction de came (f(x)), une fonction de came existante dans le système d'analyse du temps de fonctionnement peut être remise à l'état initial (E).

**23.** Commande selon l'une des revendications 12 à 22, dans laquelle un axe suiveur de l'élément de machine mobile, pour la commande de celui-ci selon la fonction de came définie, (f(x)) suit un axe pilote associé de l'élément de machine.

# FIG 1

## FIG 2

$f(x) = x^2$

1

$X_{N1}$  $X_{N2}$  1

$Y_2$

$Y_1$

$X_1$  $X_2$

EP 1 220 069 B1

## FIG 3

P  B  K

S